(19) Europäisches Patentamt
European Patent Office
Office européen des brevets

(11) **EP 4 550 253 A1**

(12) **EUROPEAN PATENT APPLICATION**

(43) Date of publication:
07.05.2025 Bulletin 2025/19

(21) Application number: 23207419.5

(22) Date of filing: 02.11.2023

(51) International Patent Classification (IPC):
$G06T\ 5/60^{(2024.01)}$ $G06T\ 5/70^{(2024.01)}$

(52) Cooperative Patent Classification (CPC):
**G06T 5/70; G06T 5/60;** G06T 2207/10101;
G06T 2207/20081; G06T 2207/20084;
G06T 2207/20192; G06T 2207/20221;
G06T 2207/30041

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Optos PLC**
**Fife KY11 8GR (GB)**

(72) Inventors:
• PELLEGRINI, Enrico
  **Dunfermline, Scotland, KY11 8GR (GB)**
• WAKEFORD, Peter
  **Dunfermline, Scotland, KY11 8GR (GB)**
• ROBERTSON, Gavin
  **Dunfermline, Scotland, KY11 8GR (GB)**

(74) Representative: **Hoffmann Eitle**
**Patent- und Rechtsanwälte PartmbB**
**Arabellastraße 30**
**81925 München (DE)**

(54) **NOISE REDUCTION IN OPHTHALMIC IMAGES**

(57) A computer-implemented method of processing at least one image of a retina of an eye acquired by an ophthalmic imaging device, wherein the at least one image shows a texture of the retina. The method comprises processing a first image of the at least one image using a noise reduction algorithm based on machine learning to generate a de-noised image of the retina, wherein the texture of the retina shown in the first image is at least partially removed by the noise reduction algorithm to generate the de-noised image. The method further comprises combining a second image of the at least one image with the de-noised image to generate at least one hybrid image of the retina which shows more of the texture of the retina than the de-noised image.

Figure 1

**Description**

[Field]

Example aspects herein generally relate to the field of noise reduction in ophthalmic images and, in particular, to techniques for reducing noise in ophthalmic images based on machine learning.

[Background]

Ophthalmic imaging devices employ various imaging techniques to image different parts of an eye, such as the retina, and are used by clinicians to diagnose and manage a variety of eye conditions. Ophthalmic imaging devices include (but are not limited to) autofluorescence (AF) ophthalmic imaging devices, scanning laser ophthalmoscopes (SLOs), optical coherence tomography (OCT) imaging devices, fundus cameras and microperimetry devices (among others), or a combination of two or more such devices.

The images acquired by such ophthalmic imaging devices are subject to sources of noise (e.g. Gaussian, Quantum or Speckle noise) which reduce the signal-to-noise ratio (SNR) of the acquired images. This may reduce the clinical value of the acquired images due to the potential obscuring of important clinical information which might be useful for the diagnosis of various pathologies of the eye. Accordingly, noise reduction algorithms are often used to improve the SNR in acquired ophthalmic images. Some modern noise reduction algorithms employ machine learning algorithms such as convolutional neural networks (CNNs), for example, which have been demonstrated to perform efficiently for de-noising tasks.

[Summary]

There is provided, in accordance with a first example aspect herein, a computer-implemented method of processing at least one image of a retina of an eye acquired by an ophthalmic imaging device, wherein the at least one image shows a texture of the retina. The method comprises processing a first image of the at least one image using a noise reduction algorithm based on machine learning to generate a de-noised image of the retina, wherein the texture of the retina shown in the first image is at least partially removed by the noise reduction algorithm to generate the de-noised image. The method further comprises combining a second image of the at least one image with the de-noised image to generate at least one hybrid image of the retina which shows more of the texture of the retina than the de-noised image.

The at least one hybrid image of the retina may be generated by combining the second image with the de-noised image using respective weightings for the second image and the de-noised image. Further, the at least one hybrid image of the retina may be generated by using the weightings to calculate one of a weighted sum or a weighted average of the second image and the de-noised image.

The computer-implemented method of the first example aspect or any of its example implementations set out above may further comprise receiving a setting indication from a user for setting the weightings, and setting the weightings using the setting indication. Additionally, or alternatively, the method may comprise generating a control signal for a display device to display the at least one hybrid image.

In some example implementations, a plurality of hybrid images is generated by combining the second image with the de-noised image using different respective weightings, and a plurality of control signals are generated for the display device to display the plurality of hybrid images.

The computer-implemented method of the first example aspect or any of its example implementations set out above may further comprise receiving an update indication from a user for updating the weightings, and updating the weightings using the update indication.

In any of the foregoing, the noise reduction algorithm may be based on a convolutional neural network, and the at least one image of the retina of the eye may be at least one fundus autofluorescence image of the retina of the eye.

There is also provided, according to a second example aspect herein, a computer program comprising computer-readable instructions which, when executed by a processor, cause the processor to perform a method according to the first example aspect or any of its example implementations set out above. The computer program may be stored on a non-transitory computer-readable storage medium (such as a computer hard disk or a CD, for example) or carried by a computer-readable signal.

There is also provided, according to a third example aspect herein, a data processing apparatus arranged to perform a method according to the first example aspect or any of its example implementations set out above. The data processing apparatus may comprise at least one processor and at least one memory storing computer-readable instructions that, when executed by the at least one processor, cause the at least one processor to perform a method according to the first example aspect or any of its example implementations set out above.

[Brief Description of the Drawings]

Example embodiments will now be explained in detail, by way of non-limiting example only, with reference to the accompanying figures described below. Like reference numerals appearing in different figures denote identical or functionally similar elements, unless indicated otherwise.

Figure 1 is a schematic illustration of a data processing apparatus 100 according to an example embodiment herein.

Figure 2 is a schematic illustration of an example implementation of the data processing apparatus 100 of the example embodiment in a programmable signal processing hardware 200.

Figure 3 is a flow diagram illustrating a process by which the data processing apparatus 100 processes at least one image according to the example embodiment herein.

Figures 4A and 4B are enlarged versions of the image 10-1 and the de-noised image 110-1 shown in Figure 1, respectively.

Figures 5A to 5I are hybrid images 50-1, 50-2, ..., 50-9 which have been generated using Equation 1 described herein with the image 10-1, the de-noised image 110-1 and alpha values of 0.1, 0.2, ..., 0.9, respectively.

[Detailed Description of Example Embodiments]

The present inventors have recognised that the use of conventional noise reduction algorithms as described above to reduce noise in retinal images tends to result in a loss of some or all of the texture of the retina shown in the images. This appears to be caused by the noise reduction algorithms having difficulty distinguishing between noise and texture within the acquired images, which often have a similar appearance. This loss of the texture may result in the loss of important clinical information from the acquired images, which might otherwise be useful for the diagnosis of various pathologies of the eye and may lead to images which appear to a clinician to be unrealistic (e.g. they may appear 'flat' to the clinician).

To address the above-described problem recognised by the present inventors, the present inventors have devised a computer-implemented method of processing at least one image of a retina of an eye acquired by an ophthalmic imaging device, wherein the at least one image shows a texture of the retina. The method comprises processing a first image of the at least one image using a noise reduction algorithm based on machine learning to generate a de-noised image of the retina, wherein the texture of the retina shown in the first image is at least partially removed by the noise reduction algorithm to generate the de-noised image. The method further comprises combining a second image of the at least one image with the de-noised image to generate at least one hybrid image of the retina which shows more of the texture of the retina than the de-noised image. This improvement in the amount of texture shown in the hybrid image relative to the amount of texture shown in the de-noised image may be important clinically, as information concerning the texture of the retina may be important clinical information that is useful for the diagnosis of various pathologies of the eye. Further, the hybrid image may appear to be more realistic to a clinician due to the increased amount of the texture of the retina that is shown in the hybrid image (e.g. the hybrid image may not appear 'flat'). The shortcomings of conventional noise reduction algorithms discussed above arise not only in the processing of images of the retina but also in the processing of images of other parts of the eye, notably the anterior segment. The computer-implemented methods described herein are also applicable to the processing of such images.

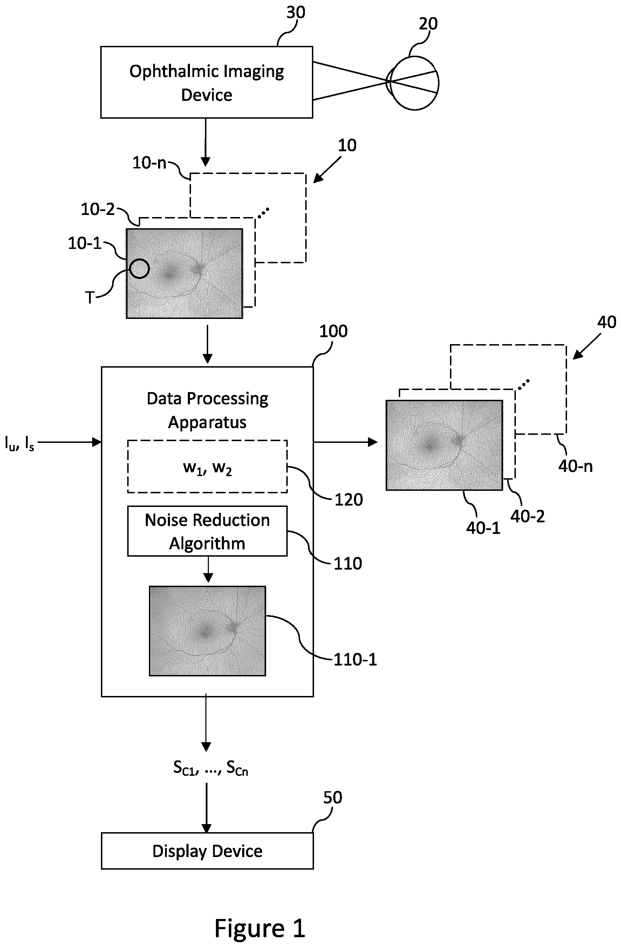

Figure 1 is a schematic illustration of a data processing apparatus 100 arranged to process at least one image 10 of a retina of an eye 20 acquired by an ophthalmic imaging device 30.

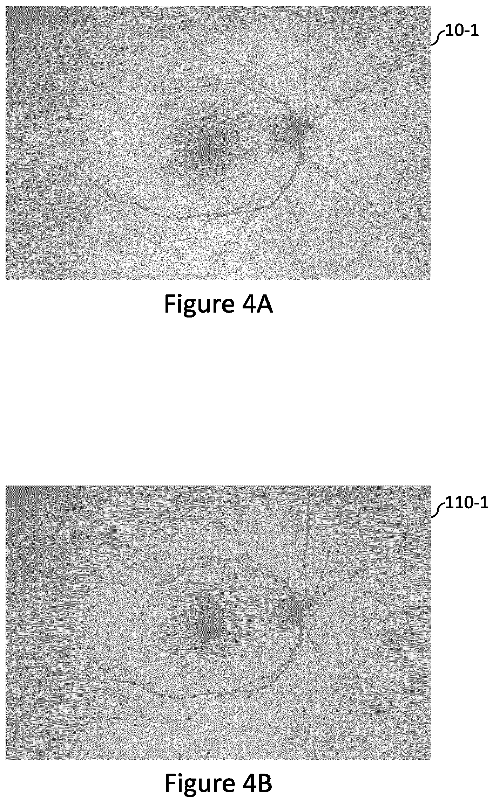

The at least one image 10 may, as in the present example embodiment, be at least one fundus autofluorescence (FAF) image (as shown, see also Figure 4A) acquired by a FAF ophthalmic imaging device as the ophthalmic imaging device 30. For example, the at least one FAF image may be at least one green (i.e. green laser) FAF image acquired by an Optos™ California or Silverstone imaging device or may be at least one blue (i.e. blue laser) FAF image. However, the at least one image 10 is not so limited, and may take other forms which show the texture T of the retina of the eye 20. For example, the at least one image 10 may alternatively be at least one optical coherence tomography (OCT) image (e.g. a B-scan) acquired by an OCT imaging device as the ophthalmic imaging device 30. As a further example, the at least one image 10 may be at least one reflectance image (e.g. a red, a blue or a green reflectance image) of the retina acquired by a fundus camera, an SLO or other ophthalmic imaging device for acquiring reflectance images. The portion of the eye 20 imaged in the image(s) 10 need not include the retina, and may instead comprise an anterior segment (AS) of the eye 20.

The at least one image 10 of the retina of the eye 20 shows a texture T of the retina. In this context, the texture is an anatomical texture associated with the retina, which is indicative of an anatomical structure in the retina of the eye 20. For example, where the images acquired by the ophthalmic imaging device 30 are FAF images, as in the present example embodiment, the structure may be defined by a spatial distribution of fluorophores across the retina. As another example, where the images acquired by the ophthalmic imaging device 30 are OCT images, the structure may comprise a physical structure of one or more layers of the retina. As a further example, where the images acquired by the ophthalmic imaging device 30 are reflectance images of the retina, the structure may comprise the upper surface of the retina, such that the texture is a physical texture of the surface that reflects the topography of the surface. The at least one image 10 processed by the data processing apparatus 100 may, as in the present example embodiment, be an image 10-1 acquired by the ophthalmic imaging device 30, although the data processing apparatus 100 may alternatively process a plurality of images 10-1, 10-2, ..., 10-n of the retina, as described below.

The data processing apparatus 100 may, as in the present example embodiment, be arranged to process the image 10-1 using a noise reduction algorithm 110 based on machine learning to generate a de-noised image 110-1 of the retina, as described in more detail below. The data processing apparatus 100 may be arranged to receive the image 10-1 from the ophthalmic imaging device 30, although the data processing apparatus 100 may alternatively be arranged to acquire the image 10-1 by controlling the ophthalmic imaging device 30 to capture the image 10-1. For example, this may be the case where the functions of the data processing apparatus 100 are implemented by the processor of the ophthalmic imaging device 30, which controls the acquisition of images by the ophthalmic imaging device 30 or where the data processing apparatus 100 is arranged to control the functions of the processor of the ophthalmic imaging device 30 which controls the acquisition of images by the ophthalmic imaging device 30.

The data processing apparatus 100 may, as in the present example embodiment, be further arranged to combine the (single) image 10-1 with the de-noised image 110-1 derived therefrom to generate a first hybrid image 40-1 (as shown in Figure 1 for the present example embodiment as a FAF image, see also Figure 4B) which shows more of the texture T than the de-noised image 110-1. However, the data processing apparatus 100 may, more generally, generate at least one hybrid image 40 and may thus generate a plurality of hybrid images 40-1, 40-2, ..., 40-n, as described below. The data processing apparatus 100 may use weightings $w_1$, and $w_2$, which are labelled 120 in Figure 1, when combining the image 10-1 with the de-noised image 110-1 to generate the first hybrid image 40-1 which shows more of the texture T than the de-noised image 110-1, as will later be described.

The data processing apparatus 100 may, as in the present example embodiment, be further arranged to generate at least one of the control signals $S_{C1}$, ..., $S_{Cn}$ for a display device 50 to display the at least one hybrid image 40. The display device 50 may be a part of the ophthalmic imaging device 30 or may be the screen of an external computer, for example.

The data processing apparatus 100 may, as in the present example embodiment, be further arranged to receive at least one of the indications $I_u$, $I_s$ from a user of the data processing apparatus 100 for at least one of setting or updating the weightings 120, as will later be described.

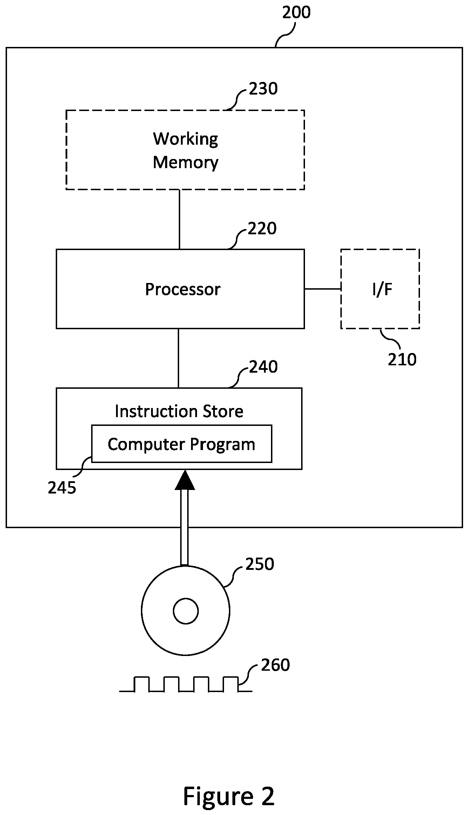

The data processing apparatus 100 may be provided in any suitable form, for example as a processor 220 of a programmable signal processing hardware 200 of the kind illustrated schematically in Figure 2. The components of the programmable signal processing hardware 200 may be included within the data processing apparatus 100. The programmable signal processing apparatus 200 comprises a communication interface (I/F) 210 for receiving the at least one image 10 (in some example embodiments) and, where provided, at least one of the indications $I_u$, $I_s$ described above and for outputting at least one hybrid image 40 and, where provided, at least one of the control signals $S_{C1}$, ..., $S_{Cn}$ described above. The signal processing hardware 200 further comprises the processor 220 (e.g. a Central Processing Unit, CPU, and/or a Graphics Processing Unit, GPU), a working memory 230 (e.g. a random-access memory) and an instruction store 240 storing a computer program 245 comprising the computer-readable instructions which, when executed by the processor 220, cause the processor 220 to perform various functions of the data processing apparatus 100 described herein.

The working memory 230 stores information used by the processor 220 during execution of the computer program 245, including the noise reduction algorithm 110 and, optionally, the weightings $w_1$ and $w_2$. The instruction store 240 may comprise a ROM (e.g. in the form of an electrically erasable programmable read-only memory (EEPROM) or flash memory) which is pre-loaded with the computer-readable instructions. Alternatively, the instruction store 240 may comprise a RAM or similar type of memory, and the computer-readable instructions of the computer program 245 can be input thereto from a computer program product, such as a non-transitory, computer-readable storage medium 250 in the form of a CD-ROM, DVDROM, etc. or a computer-readable signal 260 carrying the computer-readable instructions. In any case, the computer program 245, when executed by the processor 220, causes the processor 220 to perform the functions of the data processing apparatus 100 as described herein. In other words, the data processing apparatus 100 of the present example embodiment may comprise the computer processor 220 and the memory 240 storing computer-readable instructions which, when executed by the computer processor 220, cause the computer processor 220 to perform the functions of the data processing apparatus 100 as described herein.

It should be noted, however, that the data processing apparatus 100 may alternatively be implemented in non-programmable hardware, such as an ASIC, an FPGA or other integrated circuit dedicated to performing the functions of the data processing apparatus 100 described herein, or a combination of such non-programmable hardware and program-

EP 4 550 253 A1

mable hardware as described above with reference to Figure 2. Further, in some example embodiments, the programmable signal processing hardware 200 may further perform the functions of the ophthalmic imaging device 30 and may control the display device 50.

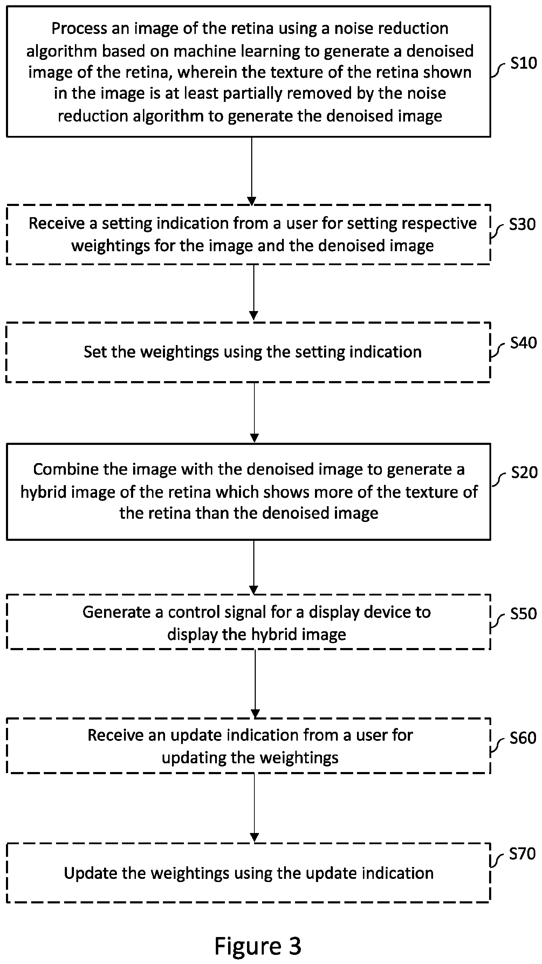

Figure 3 is a flow diagram illustrating a process by which the data processing apparatus 100 processes the image 10-1. While the processes in Figure 3 are show in a specified order, it would be appreciated by those skilled in the art that the process of Figure 3 is not limited to this order and that one or more of the processes may be performed in parallel (e.g. processes S30 and S40 may be performed before, or in parallel with, process S10). Processes in the flow diagram represented by dashed boxes are optional and may be omitted, as described below.

In process S10 of Figure 3, the data processing apparatus 100 processes the image 10-1 using the noise reduction algorithm 110 based on machine learning to generate the de-noised image 110-1. The noise in the image 10-1 is at least partially removed by the noise reduction algorithm 110 to generate the de-noised image 110-1. However, the texture T of the retina shown in the image 10-1 is also at least partially removed by the noise reduction algorithm 110 in this process. This loss of the texture T of the retina in the de-noised image 110-1 is undesirable, as has been previously explained.

The noise reduction algorithm 110 may, as in the present example embodiment, be based on a convolutional neural network (CNN). For example, the noise reduction algorithm 110 may be a denoising autoencoder, a generative adversarial network (GAN) or one of the denoising CNNs described in Ilesanmi, A.E., Ilesanmi, T.O., "Methods for image denoising using convolutional neural network: a review.", Complex Intell. Syst. 7, 2179-2198 (2021), the contents of which are incorporated herein by reference in their entirety. The noise reduction algorithm 110 may be the U-NET CNN described in Ronneberger, O., Fischer, P. and Brox, T., 2015, "U-net: Convolutional networks for biomedical image segmentation", In Medical Image Computing and Computer-Assisted Intervention-MICCAI 2015: 18th International Conference, Munich, Germany, October 5-9, 2015, Proceedings, Part III 18 (pp. 234-241), Springer International Publishing, or the U-NET CNN described in Lehtinen, J., Munkberg, J., Hasselgren, J., Laine, S., Karras, T., Aittala, M. and Aila, T., 2018, "Noise2Noise: Learning image restoration without clean data", arXiv preprint arXiv:1803.04189, the contents of which are incorporated herein by reference in their entirety. However, the form of the noise reduction algorithm 110 is not so limited, and it may alternatively be based on other machine learning algorithms. For example, the noise reduction algorithm 110 may alternatively be a Bayesian image denoising algorithm such as that described in Kataoka, S., Yasuda, M., "Bayesian Image Denoising with Multiple Noisy Images.", Rev Socionetwork Strat 13, 267-280 (2019), the contents of which are incorporated herein by reference in their entirety. The noise reduction algorithm 110 may be pre-trained before it is stored in a memory of the data processing apparatus 100 or may be trained by the data processing apparatus 100 upon receipt of a training data set for training the noise reduction algorithm 110.

Figure 4A and 4B are enlarged versions of the image 10-1 and the de-noised image 110-1 shown in Figure 1, respectively. As can be seen, the noise visible in the image 10-1 has been reduced in the de-noised image 110-1 by the noise reduction algorithm 110 (which, in this case, is based on a U-NET CNN similar to those described above).

Referring again to Figure 3, in process S20, the data processing apparatus 100 combines the image 10-1 with the de-noised image 110-1 to generate the hybrid image 40-1, which shows more of the texture T than the de-noised image 110-1. That is, the texture T of the retina shown in the image 10-1 is added to the de-noised image 110-1 by combining the image 10-1 with the de-noised image 110-1 to generate the hybrid image 40-1 (which thus shows more of the texture T of the retina than the de-noised image 110-1). The hybrid image 40-1 may, as in the first example embodiment, be generated by combining the image 10-1 with the de-noised image 110-1 using the weightings 120. For example, the combination of the image 10-1 with the de-noised image 110-1 using the weightings 120 may be a weighted sum or a weighted average of the image 10-1 and the de-noised image 110-1. However, the hybrid image 40-1 may alternatively be combined without the weightings 120, by simply averaging or summing the image 10-1 and the de-noised image 110-1 (i.e. by performing an unweighted average or summation). That is, the data processing apparatus 100 may calculate an average or a sum of the image 10-1 and the de-noised image 110-1, such that the respective pixel value of each pixel in the resulting averaged image (or summed image, as the case may be) is a mean (or a sum, as the case may be) of the pixel values of correspondingly located pixels in the image 10-1 and the de-noised image 110-1 that correspond to respective common location on retina.

The amounts of texture in the hybrid image 40-1 and de-noised image 110-1 may be quantified using an algorithm as described in the article "Detection of Textured Areas in Images Using a Disorganization Indicator Based on Component Counts" by R. Bergman et al., J. Electronic Imaging. 17. 043003 (2008), the contents of which are incorporated herein by reference in their entirety. The texture detector presented in this article is based on the intuition that texture in a natural image is "disorganized". The measure used to detect texture examines the structure of local regions of the image. This structural approach allows both structured and unstructured texture at many scales to be detected. Furthermore, it distinguishes between edges and texture, and also between texture and noise. Automatic detection results are shown in the article to match human classification of corresponding image areas. The amounts of texture in the hybrid image 40-1 and de-noised image 110-1 may be compared by comparing the areas of these images that are designated as 'texture' by the algorithm. An indication of the amount of texture in the hybrid image 40-1 and de-noised image 110-1 may be obtained using measurements of SNR or the structural similarity index measure (SSIM), as noise and texture may have a similar appearance.

Where the combination of the image 10-1 with the de-noised image 110-1 using the weightings 120 is a weighted average, the weighted average may be expressed as:

$$X' = (1 - \alpha)X + \alpha N(X), \qquad\qquad Eq. 1$$

where X' is the hybrid image 40-1, *X* is the image 10-1, *N(X)* is the de-noised image 110-1 generated by the noise reduction algorithm 110 and $\alpha$ is a predetermined constant between the values of 0 and 1. Note that when $\alpha$ is 1, the hybrid image 40-1 is the same as de-noised image 110-1, and when $\alpha$ is 0, the hybrid image 40-1 is the same as image 10-1. The weightings in this case are (1 - $\alpha$) and $\alpha$, and the sum of the weightings equals 1.

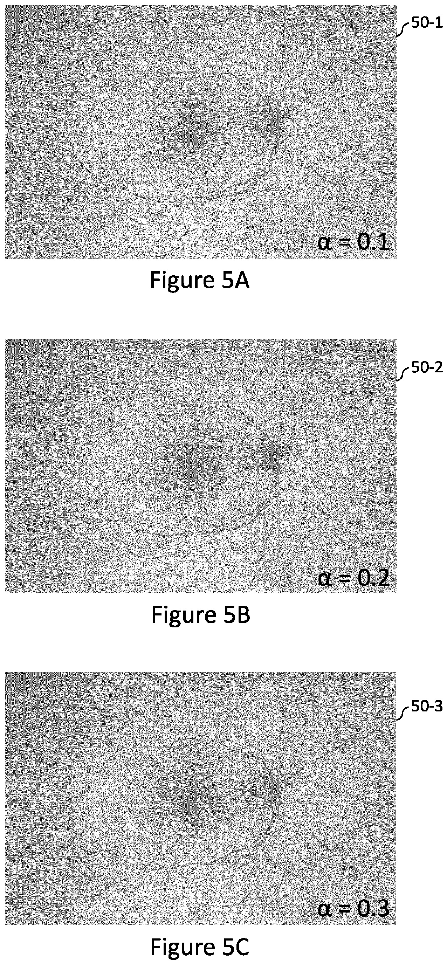

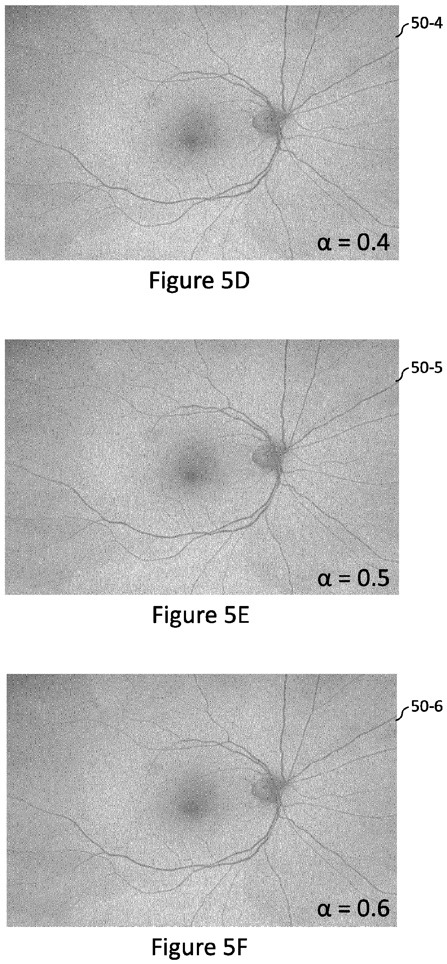

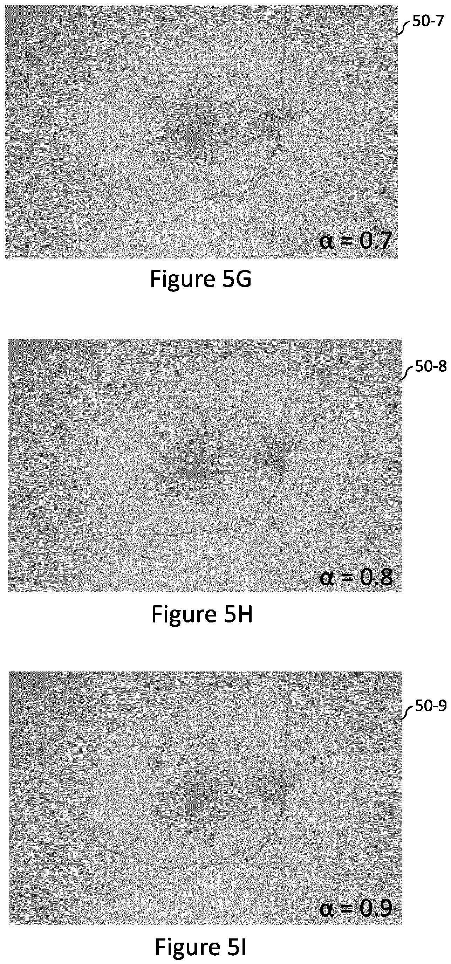

Figures 5A to 5I are hybrid images 50-1, 50-2, ..., 50-9, which have been generated using Equation 1 above with the image 10-1 in Figure 4A, the de-noised image 110-1 in Figure 4B, the noise reduction algorithm 110 as based on the U-NET CNN and with alpha values of 0.1, 0.2, ..., 0.9, respectively. As shown, as the value of alpha increases, progressively more of the texture T of the retina is added to the de-noised image 110-1, although at the expense of also adding some noise.

The weightings 120 may set at manufacture, manually input, downloaded from an external server or determined by a processor of the ophthalmic imaging device 30 in order to give the best compromise for clinical purposes between noise and texture in the hybrid image 40-1 given the capability of ophthalmic imaging device 30. However, the weightings 120 may alternatively be set by the user of the data processing apparatus 100 (e.g. a clinician) via the optional processes S30 and S40 that precede process S20 in Figure 3, as described below.

In optional process S30 of Figure 3, the data processing apparatus 100 receives a setting indication $I_s$ from the user for setting the weightings 120. For example, the setting indication $I_s$ from the user may comprise user-selected weightings 120 or may be a value used to set the weightings 120 (e.g. the value of $\alpha$ in Equation 1 above).

In optional process S40 of Figure 3, the data processing apparatus 100 sets the weightings 120 using the setting indication $I_s$. For example, where the setting indication $I_s$ comprises user-selected weightings 120, the data processing apparatus 100 sets the weightings 120 to these user-selected weightings. Where the setting indication $I_s$ is a value used to set the weightings 120, the data processing apparatus 100 uses the value to set the weightings 120 (e.g. the data processing apparatus 100 sets the weightings in Equation 1 by using the received value of $\alpha$).

Once the hybrid image 40-1 has been generated by the data processing apparatus 100 in the process S20 of Figure 3 as described above, it may be stored in the memory of the data processing apparatus 100 or may be transmitted to an external storage. In optional process S50 of Figure 3, the data processing apparatus 100 generates the control signal $S_{C1}$ for the display device 50 to display the hybrid image 40-1. For example, the control signal $S_{C1}$ may comprise the hybrid image 40-1 and an indication that the hybrid image 40-1 is to be displayed by the display device 50 or may comprise an indication that the display device 50 is to recall the hybrid image 40-1 from a memory which stores the hybrid image 40-1 and is to display it.

In optional process S60 of Figure 3, the data processing apparatus 100 receives an update indication $I_u$ from the user for updating the weightings 120, in a similar manner to that described above in process S30 of Figure 3. For example, the user may view the hybrid image 40-1 displayed by the display device 50 and decide that the ratio between the weightings 120 should be increased or decreased (or that it does not need to be changed, in which case optional process S60 would not be performed).

In optional process S70 of Figure 3, where the update indication $I_u$ has been received by the data processing apparatus 100, the data processing apparatus 100 updates the weightings 120 using the update indication $I_u$, in a similar manner as described above in process S40.

After optional processes S60 and S70 in Figure 3, the data processing apparatus 100 may perform process S20 again, in the same manner as described above except with the weightings 120 as updated by the process S70 described above, and may perform process S50 described above to generate a control signal Scz for the display device 50 to display the hybrid image thus generated. These processes may be repeated as often as desired to allow the user of the data processing apparatus 100 to adjust the weightings 120 and thus may allow the user to tailor the weightings 120 to the image 10-1 at hand to provide the best compromise for clinical purposes between noise and texture.

In an alternative example embodiment, in process S20 of Figure 3, the plurality of hybrid images 40-1, 40-2, ..., 40-n may instead be generated by the data processing apparatus 100, by combining the image 10-1 and the de-noised image 110-1 using a different respective weighting for each of the hybrid images 40-1, 40-2, ..., 40-n. For example, the plurality of hybrid images 40-1, 40-2, ..., 40-n may be the hybrid images 50-1, 50-2, ..., 50-9 of Figures 5A to 5I, which are generated using different pairs of weightings arising from their different respective values of $\alpha$ in Equation 1. Subsequently, a plurality of control signals $S_{C1}, ..., S_{Cn}$ may be generated by the data processing apparatus 100 for the display device 50 to display the plurality of hybrid images 40-1, 40-2, ..., 40-n, in a similar manner to as described above in relation to process S50 of Figure 3. Continuing the previous example, the plurality of control signals $S_{C1}$, ..., $S_{Cn}$ may thus cause the display device 50 to display each of the hybrid images 50-1, 50-2, ..., 50-9 of Figures 5A to 5I in a manner which may, for example, be side-by-side on the display device 50.

The user may compare the displayed plurality of hybrid images 40-1, 40-2, ..., 40-n, and may select a hybrid image of the plurality of hybrid images 40-1, 40-2, ..., 40-n which is judged to provide the best compromise for clinical purposes between noise and texture. This selection may provide the update indication $I_u$ as described in process S60 above, which may be used by the data processing apparatus 100 to update the weightings 120 (to the weightings used to generate the selected hybrid image) in the same manner as described above in process S70 of Figure 3. Afterwards, the data processing apparatus 100 may perform process S20 of Figure 3 in the same manner as described above, except with the presently updated weightings, and may perform process S50 as described above to generate a further control signal for the display device 50 to display the new hybrid image thus generated.

In summary, there has been described in the foregoing a computer-implemented method of processing an image of a portion (e.g. a retina or an anterior segment) of an eye 20 acquired by an ophthalmic imaging device 30 (such an ophthalmic FAF or OCT imaging device), wherein the image shows a texture T of the portion, the method comprising: processing the image using a noise reduction algorithm 110 based on machine learning to generate a de-noised image 110-1 of the portion, wherein the texture T of the portion shown in the image is at least partially removed by the noise reduction algorithm 110 to generate the de-noised image 110-1; and combining the image with the de-noised image 110-1 to generate at least one hybrid image 40 of the portion which shows more of the texture T of the portion than the de-noised image 110-1.

Although the data processing apparatus 100 combines the image 10-1 with a de-noised image 110-1 derived from the image 10-1 to generate the hybrid image 40-1 in process S20 of Figure 3, which shows more of the texture T of the retina than the de-noised image 110-1, this is not necessarily the case. In an alternative example embodiment, the de-noised image may be combined with an image of the retina other than the image from which the de-noised image is derived. In particular, the data processing apparatus 100 may process the plurality of images 10-1, 10-2, ..., 10-n of the retina of the eye 20 acquired by the ophthalmic imaging device 30, which comprise the first image 10-1 of retina of the eye 20 and a second image 10-2 of the retina of the eye 20. These images 10-1, 10-2, ..., 10-n may be a sequence of repeat images of the retina of the eye 20, which may be acquired at different (e.g. closely spaced and successive) respective times, for example. Both the first image 10-1 and the second image 10-2 show the texture T of the eye 20, so after processing the first image 10-1 to generate the de-noised image 110-1, the data processing apparatus 100 may instead combine the second image 10-2 (which may be next to the first image 10-1 in the sequence of images, or another image in the sequence which differs to the first image 10-1) with the de-noised image 110-1 to generate the hybrid image 40-1 which shows more of the texture T of the retina than the de-noised image 110-1. That is, the texture T of the retina shown in the second image 10-2 is added to the de-noised image 110-1 by combining the second image 10-2 with the de-noised image 110-1 to generate the hybrid image 40-1 (e.g. by the second image 10-2 showing more of the texture T of the retina than the de-noised image 110-1 and a weighted average being performed, as described above).

The alternative example embodiment thus provides a computer-implemented method of processing two or more images 10-1, 10-2 of a portion (e.g. a retina or an anterior segment) of an eye 20 acquired by an ophthalmic imaging device 30 (such an ophthalmic FAF or OCT imaging device), wherein each of the images shows a texture T of the portion, the method comprising: processing a first image 10-1 of the two or more images using a noise reduction algorithm 110 based on machine learning to generate a de-noised image 110-1 of the portion, wherein the texture T of the portion shown in the first image 10-1 is at least partially removed by the noise reduction algorithm 110 to generate the de-noised image 110-1; and combining a second image 10-2 of the two or more images (which second image is different from the first image 10-1) with the de-noised image 110-1 to generate at least one hybrid image 40 of the portion which shows more of the texture T of the portion than the de-noised image 110-1.

There is more generally provided, in accordance with example embodiments herein, a computer-implemented method of processing at least one image 10 of a portion (e.g. a retina or an anterior segment) of an eye 20 acquired by an ophthalmic imaging device 30 (such an ophthalmic FAF or OCT imaging device), wherein the at least one image 10 shows a texture T of the portion, the method comprising: processing a first image 10-1 of the at least one image 10 using a noise reduction algorithm 110 based on machine learning to generate a de-noised image 110-1 of the portion, wherein the texture T of the portion shown in the first image 10-1 is at least partially removed by the noise reduction algorithm 110 to generate the de-noised image 110-1; and combining a second image of the at least one image 10 with the de-noised image 110-1 to generate at least one hybrid image 40 of the portion which shows more of the texture T of the portion than the de-noised image 110-1.

In the foregoing description, example aspects are described with reference to several example embodiments. Accordingly, the specification should be regarded as illustrative, rather than restrictive. Similarly, the figures illustrated in the drawings, which highlight the functionality and advantages of the example embodiments, are presented for example purposes only. The architecture of the example embodiments is sufficiently flexible and configurable, such that it may be utilized in ways other than those shown in the accompanying figures.

Some aspects of the examples presented herein, such as the functions of the data processing apparatus 100, may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some or all of the functionality of the data processing apparatus 100 may also be implemented by the preparation of application-specific integrated circuits, field-programmable gate arrays, or by interconnecting an appropriate network of conventional component circuits.

A computer program product may be provided in the form of a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nanosystems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the example embodiments described herein. Such software may include without limitation device drivers, operating systems, and user applications. Ultimately, such computer-readable media or storage device(s) further include software for performing example aspects of the invention, as described above.

Included in the programming and/or software of the system are software modules for implementing the procedures described herein. In some example embodiments herein, a module includes software, although in other example embodiments herein, a module includes hardware, or a combination of hardware and software.

While various example embodiments of the present invention have been described above, it should be understood that they have been presented by way of example, and not limitation. It will be apparent to persons skilled in the relevant art(s) that various changes in form and detail can be made therein. Thus, the present invention should not be limited by any of the above-described example embodiments, but should be defined only in accordance with the following claims and their equivalents.

Further, the purpose of the Abstract is to enable the Patent Office and the public generally, and especially the scientists, engineers and practitioners in the art who are not familiar with patent or legal terms or phraseology, to determine quickly from a cursory inspection the nature and essence of the technical disclosure of the application. The Abstract is not intended to be limiting as to the scope of the example embodiments presented herein in any way. It is also to be understood that any procedures recited in the claims need not be performed in the order presented.

While this specification contains many specific embodiment details, these should not be construed as limitations on the scope of any inventions or of what may be claimed, but rather as descriptions of features specific to particular embodiments described herein. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

In certain circumstances, multitasking and parallel processing may be advantageous. Moreover, the separation of various components in the embodiments described above should not be understood as requiring such separation in all embodiments, and it should be understood that the described program components and systems can generally be integrated together in a single software product or packaged into multiple software products.

Having now described some illustrative embodiments and embodiments, it is apparent that the foregoing is illustrative and not limiting, having been presented by way of example. In particular, although many of the examples presented herein involve specific combinations of apparatus or software elements, those elements may be combined in other ways to accomplish the same objectives. Acts, elements and features discussed only in connection with one embodiment are not intended to be excluded from a similar role in other embodiments or embodiments.

**Claims**

1. A computer-implemented method of processing at least one image (10) of a retina of an eye (20) acquired by an ophthalmic imaging device (30), wherein the at least one image (10) shows a texture (T) of the retina, the method comprising:

    processing (S10) a first image (10-1) of the at least one image (10) using a noise reduction algorithm (110) based on machine learning to generate a de-noised image (110-1) of the retina, wherein the texture (T) of the retina shown in the first image (10-1) is at least partially removed by the noise reduction algorithm (110) to generate the de-noised image (110-1); and

    combining (S20) a second image (10-1; 10-2) of the at least one image (10) with the de-noised image (110-1) to generate at least one hybrid image (40) of the retina which shows more of the texture (T) of the retina than the de-noised image (110-1).

2. The computer-implemented method of Claim 1, wherein the at least one hybrid image (40) of the retina is generated by combining the second image (10-1; 10-2) with the de-noised image (110-1) using respective weightings (120) for the second image (10-1; 10-2) and the de-noised image (110-1).

3. The computer-implemented method of Claim 2, wherein the at least one hybrid image (40) of the retina is generated by using the weightings (120) to calculate one of a weighted sum or a weighted average of the second image (10-1; 10-2) and the de-noised image (110-1).

4. The computer-implemented method of Claim 2 or Claim 3, further comprising receiving (S30) a setting indication ($I_s$) from a user for setting the weightings (120), and setting (S40) the weightings (120) using the setting indication ($I_s$).

5. The computer-implemented method of any of Claims 2 to 4, further comprising generating (S50) a control signal ($S_{C1}$) for a display device (50) to display the at least one hybrid image (40).

6. The computer-implemented method of Claim 5, wherein a plurality of hybrid images (40-1, 40-2, ..., 40-n) is generated by combining the second image (10-1; 10-2) with the de-noised image (110-1) using different respective weightings (120), and wherein a plurality of control signals ($S_{C1}$, ..., $S_{Cn}$) are generated for the display device (50) to display the plurality of hybrid images (40-1, 40-2, ..., 40-n).

7. The computer-implemented method of Claim 5 or Claim 6, further comprising receiving (S60) an update indication ($I_u$) from a user for updating the weightings (120), and updating (S70) the weightings (120) using the update indication ($I_u$).

8. The computer-implemented method of any preceding claim, wherein the noise reduction algorithm (110) is based on a convolutional neural network.

9. The computer-implemented method of any preceding claim, wherein the at least one image (10) of the retina of the eye (20) is at least one fundus autofluorescence image of the retina of the eye (20).

10. The computer-implemented method of any preceding claim, wherein the second image (10-1) is the same as the first image (10-1).

11. A computer program (245) comprising computer-readable instructions which, when executed by a processor (220), cause the processor (220) to perform a method according to any preceding claim.

12. A data processing apparatus (100) arranged to perform a method according to any of Claims 1 to 10.

Figure 1

200

230

Working
Memory

220

Processor

I/F

210

240

Instruction Store

Computer Program

245

250

260

Figure 2

Process an image of the retina using a noise reduction algorithm based on machine learning to generate a denoised image of the retina, wherein the texture of the retina shown in the image is at least partially removed by the noise reduction algorithm to generate the denoised image — S10

Receive a setting indication from a user for setting respective weightings for the image and the denoised image — S30

Set the weightings using the setting indication — S40

Combine the image with the denoised image to generate a hybrid image of the retina which shows more of the texture of the retina than the denoised image — S20

Generate a control signal for a display device to display the hybrid image — S50

Receive an update indication from a user for updating the weightings — S60

Update the weightings using the update indication — S70

Figure 3

10-1

Figure 4A

110-1

Figure 4B

50-1

α = 0.1

Figure 5A

50-2

α = 0.2

Figure 5B

50-3

α = 0.3

Figure 5C

Figure 5D

Figure 5E

Figure 5F

Figure 5G

Figure 5H

Figure 5I

Europäisches
Patentamt

European
Patent Office

Office européen
des brevets

# EUROPEAN SEARCH REPORT

Application Number

EP 23 20 7419

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/058803 A1 (BHATTACHARYA ARINDAM [US] ET AL) 24 February 2022 (2022-02-24) * abstract * * paragraphs [0082] – [0089] * ----- | 1-12 | INV. G06T5/60 G06T5/70 |
| A | CHEN ZAILIANG ET AL: "DN-GAN: Denoising generative adversarial networks for speckle noise reduction in optical coherence tomography images", BIOMEDICAL SIGNAL PROCESSING AND CONTROL, ELSEVIER, AMSTERDAM, NL, vol. 55, 29 August 2019 (2019-08-29), XP085914438, ISSN: 1746-8094, DOI: 10.1016/J.BSPC.2019.101632 [retrieved on 2019-08-29] * the whole document * ----- | 1-12 | |
| A | YU AIHUI ET AL: "Generative Adversarial Networks with Dense Connection for Optical Coherence Tomography Images Denoising", 2018 11TH INTERNATIONAL CONGRESS ON IMAGE AND SIGNAL PROCESSING, BIOMEDICAL ENGINEERING AND INFORMATICS (CISP-BMEI), IEEE, 13 October 2018 (2018-10-13), pages 1-5, XP033511625, DOI: 10.1109/CISP-BMEI.2018.8633086 [retrieved on 2019-02-01] * the whole document * ----- -/-- | 1-12 | **TECHNICAL FIELDS SEARCHED (IPC)** G06T |

The present search report has been drawn up for all claims

| Place of search | Date of completion of the search | Examiner |
|---|---|---|
| Munich | 10 April 2024 | Klemencic, Ales |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 23 20 7419

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZUO WANGMENG ET AL: "Texture Enhanced Image Denoising via Gradient Histogram Preservation", 2017 IEEE CONFERENCE ON COMPUTER VISION AND PATTERN RECOGNITION (CVPR), IEEE COMPUTER SOCIETY, US, 23 June 2013 (2013-06-23), pages 1203-1210, XP032492805, ISSN: 1063-6919, DOI: 10.1109/CVPR.2013.159 [retrieved on 2013-10-02] * the whole document * | 1-12 | |
| A | IQBAL SHAHZAIB ET AL: "Recent trends and advances in fundus image analysis: A review", COMPUTERS IN BIOLOGY AND MEDICINE, vol. 151, 1 December 2022 (2022-12-01), page 106277, XP093062847, US ISSN: 0010-4825, DOI: 10.1016/j.compbiomed.2022.106277 Retrieved from the Internet: URL:https://www.sciencedirect.com/science/article/pii/S0010482522009854/pdfft?md5=b243361688b55e76183908e573f76991&pid=1-s2.0-S0010482522009854-main.pdf> * the whole document * | 1-12 | |

TECHNICAL FIELDS
SEARCHED     (IPC)

The present search report has been drawn up for all claims

| Place of search | Date of completion of the search | Examiner |
|---|---|---|
| Munich | 10 April 2024 | Klemencic, Ales |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 7419

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2024

| Patent document cited in search report | Publication date | Patent family member(s) | Publication date |
|---|---|---|---|
| US 2022058803 A1 | 24-02-2022 | CN 113396440 A | 14-09-2021 |
| | | EP 3924931 A1 | 22-12-2021 |
| | | JP 2022520415 A | 30-03-2022 |
| | | US 2022058803 A1 | 24-02-2022 |
| | | WO 2020165196 A1 | 20-08-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ILESANMI, A.E.** ; **ILESANMI, T.O.** Methods for image denoising using convolutional neural network: a review. *Complex Intell. Syst.*, 2021, vol. 7, 2179-2198
- U-net: Convolutional networks for biomedical image segmentation. **RONNEBERGER, O.** ; **FISCHER, P.** ; **BROX, T.** Medical Image Computing and Computer-Assisted Intervention-MICCAI 2015: 18th International Conference, Munich, Germany, October 5-9, 2015, Proceedings. Springer International Publishing, 2015, vol. 18, 234-241
- **LEHTINEN, J.** ; **MUNKBERG, J.** ; **HASSELGREN, J.** ; **LAINE, S.** ; **KARRAS, T.** ; **AITTALA, M.** ; **AILA, T.** Noise2Noise: Learning image restoration without clean data. *arXiv:1803.04189*, 2018
- **KATAOKA, S.** ; **YASUDA, M.** Bayesian Image Denoising with Multiple Noisy Images. *Rev Socio-network Strat*, 2019, vol. 13, 267-280
- **R. BERGMAN et al.** Detection of Textured Areas in Images Using a Disorganization Indicator Based on Component Counts. *J. Electronic Imaging*, 2008, vol. 17, 043003